# EUROPEAN PATENT APPLICATION

(11) **EP 2 454 931 A1**
(43) Date of publication of application: **23.05.2012**
(21) Application number: 10425354.7
(22) Date of filing: 17.11.2010
(51) Int. Cl.: A01D 45/00, A01D 46/00, A01D 46/28, A01D 91/04, B62D 33/02, B62D 63/06

(54) **Easy system for grapes harvest and vineyard works**

(71) Applicant: Vacchelli, Giovanni, 58100 Marina di Grosseto (IT)
(72) Inventor: Vacchelli, Giovanni, 58100 Marina di Grosseto (IT)

(57) **Abstract**

Easy system for grapes harvest and vineyard work saving time and work pain based on a special wagon pulled by a tractor where workers are seated

## Description

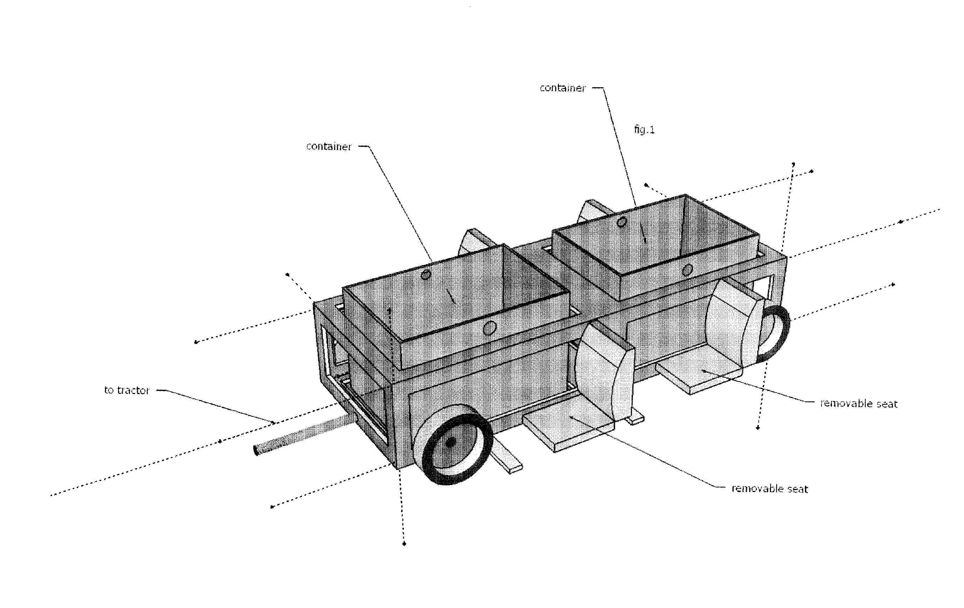

The system is based on a special wagon pulled by a tractor or other vehicle (fig. 1) on which sides are fitted two removable seats and in the center two removable containers. The wagon is pulled between two lines of vineyards , the operators are sit at the right level ( the high of the seats is adjustable ) to cut the vine grapes and depose them in the center containers. Once the containers are full, they can be replaced. The seats on the wagon are removable to allow the use of the wagon between narrow lines of vineyard.

The speed of the wagon will be adjusted to allow the operators to cut all the vine grapes.

This simple system allows to speed up vine harvest, it makes this operation less painful keeping the quality of a manual harvest, eliminates all plastic boxes normally used , their cleaning and transportation.

This wagon can be used also for periodic work on vineyards as pruning .

## Claims

1. Increasing working speed and operation speed

2. Reduce workers fatigue

3. Save money eliminating plastic boxes, their transportation and cleaning
